(19) Europäisches Patentamt
European Patent Office
Office européen des brevets

(11) **EP 3 457 097 B1**

(12) **FASCICULE DE BREVET EUROPEEN**

(45) Date de publication et mention
de la délivrance du brevet:
**17.03.2021   Bulletin 2021/11**

(51) Int Cl.:
***G01F 23/26*** *(2006.01)*    ***G01F 25/00*** *(2006.01)*

(21) Numéro de dépôt: **18193692.3**

(22) Date de dépôt: **11.09.2018**

(54) **SONDE POUR DISPOSITIF LIMITEUR DE REMPLISSAGE POUR CITERNE DE TRANSPORT DE CARBURANT PÉTROLIER LIQUIDE ET DISPOSITIF LIMITEUR DE REMPLISSAGE CORRESPONDANT**

SONDE FÜR FÜLLBEGRENZUNGSVORRICHTUNG FÜR TRANSPORTZISTERNE FÜR FLÜSSIGEN KRAFTSTOFF AUF ERDÖLBASIS, UND ENTSPRECHENDE FÜLLBEGRENZUNGSVORRICHTUNG

PROBE FOR FILL LIMITING DEVICE FOR LIQUID PETROLEUM FUEL TRANSPORT TANK AND CORRESPONDING FILL LIMITING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2017   FR 1758479**

(43) Date de publication de la demande:
**20.03.2019   Bulletin 2019/12**

(73) Titulaire: **INTERSENS**
**75008 Paris (FR)**

(72) Inventeur: **MOREL-FATIO, Bruno**
**75008 PARIS (FR)**

(74) Mandataire: **Casalonga**
**Casalonga & Partners**
**Bayerstraße 71/73**
**80335 München (DE)**

(56) Documents cités:
**DE-A1- 4 115 207       FR-A1- 2 339 895**
**FR-A1- 2 829 240       FR-A1- 2 851 653**
**US-B1- 8 810 260**

**Description**

La présente invention concerne, de manière générale, le transport de carburants pétroliers liquides et se rapporte plus particulièrement aux dispositifs limiteurs de remplissage pour citerne de transport de carburant pétrolier liquide.

L'invention a en particulier pour objet un dispositif antidébordement qui est destiné à être mis en œuvre lors du remplissage de citernes.

Au niveau mondial, la grande majorité de tels dispositifs doivent répondre à la norme européenne CEN « EN 13922 » qui permet notamment de garantir l'interopérabilité entre les sondes du véhicule citerne et le dispositif de chargement. Pour éviter des débordements de matière dangereuse explosibles lors de la phase de remplissage, une sonde est placée dans la partie supérieure de chaque compartiment du véhicule citerne. Cette sonde change d'état dès qu'elle est mouillée. Elle est raccordée au dispositif de chargement afin que ce dernier stoppe immédiatement le processus de remplissage dès que le mouillage est détecté.

Dans le but de limiter le remplissage, il a tout d'abord été proposé d'utiliser des sondes fondées sur la mise en œuvre d'une thermistance qui permet de détecter un différentiel de températures lors de la mise en contact de la sonde avec le produit.

Il a été toutefois constaté que ce type de technologie à base de thermistance était trop fragile et conduisait à des remplacements trop fréquents des sondes.

Il a par ailleurs été proposé de détecter le niveau de carburant dans une citerne, lors de son remplissage, en utilisant des sondes fondées sur un principe optique de variation de l'angle de réfraction d'un faisceau lumineux. Ces sondes utilisent un cône en matière transparente, par exemple en polypropylène, qui réfléchit un faisceau lumineux non divergent émis par une diode électroluminescente et comportant un récepteur qui détecte la lumière réfléchie. Le cône est positionné à un niveau de détection de débordement. Ainsi lorsque le niveau de liquide atteint le niveau de détection de la sonde, l'indice de réfraction du cône est modifié et la lumière n'est plus détectée.

Ce type de technologie souffre toutefois de nombreux inconvénients.

En premier lieu, l'angle de réfraction du faisceau lumineux dépend d'une très faible surface de contact, qui reçoit le faisceau lumineux, de l'ordre de 1 mm de diamètre. Si, par exemple, une bulle est présente au niveau de ce point de contact, la direction du faisceau s'en trouve perturbée.

En second lieu, le faisceau lumineux peut être réfléchi de manière non maîtrisée par des surfaces métalliques au sein de la citerne. Par exemple, des dispositifs de dispersion de faisceau lumineux ont dû être récemment ajoutés en fond de gaine de protection antifraude pour éviter les réflexions parasites sur ces gaines.

Il a par ailleurs été constaté que les caractéristiques optiques du cône transparent tendent à se dégrader dans le temps, par exemple par opacification ou par apparition de micro fentes, de sorte qu'avec le temps la fonction du cône transparent tend à se dégrader.

De plus, l'énergie lumineuse des diodes électroluminescentes diminue avec le temps et avec l'élévation de la température. Ce phénomène est bien connu des constructeurs de sondes optiques. Lorsque la température dépasse les 60°C le bon fonctionnement n'est plus garanti et la durée de vie du produit est écourtée.

Enfin, l'énergie nécessaire à l'émission d'un faisceau lumineux par une diode électroluminescente est intrinsèquement élevée, difficilement compatible avec les contraintes de « sécurité intrinsèque » requises dans des environnements d'atmosphère explosible qui limitent l'énergie électrique à des niveaux extrêmement bas afin de garantir l'absence d'étincelles et de points d'échauffement. Une intensité lumineuse suffisante est difficile à obtenir, en particulier lorsque les performances des diodes sont dégradées. La demande de brevet allemand DE 41 15 207 A1 décrit une sonde pour dispositif limiteur de remplissage avec sondes capacitives redondantes de l'état de l'art antérieur.

Le but de l'invention est de proposer une sonde pour dispositif limiteur de remplissage pour citerne de transport de carburant pétrolier liquide qui pallie ces divers inconvénients.

L'invention a donc pour objet, selon un premier aspect, une sonde pour dispositif limiteur de remplissage pour citerne de transport de carburant pétrolier liquide, comprenant un détecteur de niveau monté sur un support venant se fixer sur la citerne de sorte que le détecteur soit placé dans la citerne à une hauteur maximale de remplissage admissible, le détecteur de niveau comportant un capteur de mesure apte à assurer une mesure de niveau redondante.

La sonde selon l'invention permet ainsi de mettre aisément en œuvre un principe de redondance qui améliore de manière substantielle la sureté de la mesure faite au sein de la sonde en contact physique avec le produit dont le niveau est contrôlé. En outre, l'invention permet d'assurer une mesure tridimensionnelle du niveau de liquide, et non pas monodimensionnelle comme c'est le cas lors de l'utilisation d'un capteur optique.

Par exemple, la détection de niveau peut être basée sur une comparaison entre la mesure de permittivité diélectrique soit du gaz ambiant (capteur non mouillé), soit du liquide en cours de remplissage (capteur mouillé).

Dans un mode de réalisation, le capteur de mesure comprend au moins deux ensembles de mesure indépendants permettant d'augmenter la fiabilité du dispositif.

En d'autres termes, la sonde comporte plusieurs sous-ensembles de capteurs indépendants délivrant des mesures qui, par corrélation, permettent d'augmenter la sureté du résultat fourni par la sonde.

Par exemple, chaque ensemble de mesure comporte un jeu de plusieurs électrodes et le capteur comporte des moyens de mesure de la permittivité diélectrique du fluide entre les électrodes.

Dans un mode de réalisation, chaque ensemble de mesure comporte au moins deux jeux d'électrodes matérialisées par des plaques parallèles séparées deux à deux et définissant différentes zones de détection, séparées par une électrode séparatrice commune, les moyens de mesure de permittivité diélectrique étant aptes à mesurer la permittivité diélectrique entre les plaques, indépendamment pour chaque zone de détection.

Avantageusement, la sonde comporte des moyens de traitement de signaux par corrélation des mesures de niveau redondantes issues du capteur afin d'en augmenter la sûreté.

L'invention a également pour objet, selon un deuxième aspect, un dispositif limiteur de remplissage pour citerne de transfert de carburant pétrolier liquide, comprenant un ensemble de sondes telles que définies ci-dessus, pour détecter un niveau de remplissage dans un ensemble de compartiments et un contrôleur de remplissage recevant un signal d'autorisation de remplissage émis pour chaque sonde, pour piloter des actionneurs, de type pompe et vanne, d'un contrôleur de remplissage.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'une citerne dotée d'un dispositif limiteur de remplissage conforme à l'invention ;
- la figure 2 est un schéma synoptique d'un exemple de réalisation d'une sonde conforme à l'invention ; et
- la figure 3 est une vue schématique en perspective d'un exemple de réalisation d'une sonde conforme à l'invention.

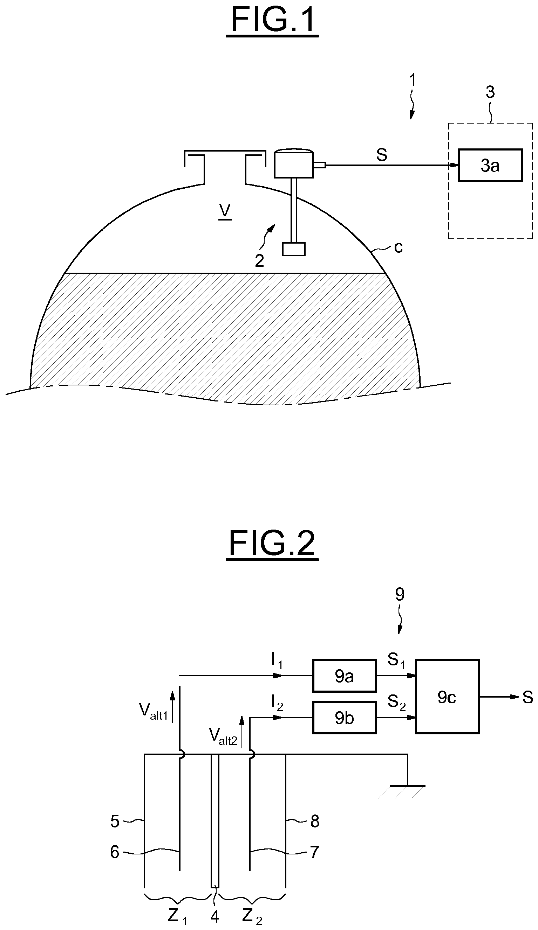

La citerne C illustrée sur la figure 1 est par exemple une citerne d'un véhicule, de type camion-citerne, utilisée pour le transport de carburant pétrolier liquide.

Dans l'exemple de réalisation illustré à la figure 1, une seule citerne a été représentée. Un tel camion peut, en France, comporter sept à neuf compartiments de taille variable.

Comme on le voit, chaque citerne C est dotée d'un dispositif limiteur de remplissage afin de détecter tout risque de débordement en détectant le remplissage de la citerne jusqu'à une hauteur maximale de remplissage admissible qui, avantageusement, délimite un volume V d'accueil de sécurité, par exemple de l'ordre d'une centaine de litres.

Un tel volume d'accueil permet d'arrêter les pompes ou vannes d'un système de remplissage, lorsque la hauteur maximale est atteinte, afin d'éviter tout risque de débordement.

Le dispositif limiteur de remplissage, désigné par la référence numérique générale 1, comporte, pour chaque citerne, une sonde 2 qui assure la détection du niveau maximal de remplissage dans la citerne C et qui est raccordée à un dispositif 3 de chargement de citernes de transport de carburant pétrolier liquide prévu au niveau du quai de chargement de camions citernes, et comprenant un contrôleur de remplissage 3a constitué par un analyseur de sonde intégré au dispositif de chargement pour piloter le dispositif de chargement des citernes à partir des signaux issus des sondes 2.

La sonde 2 comprend un capteur de niveau 2a comportant des électrodes et des moyens de mesure de permittivité diélectrique du fluide entre les électrodes.

Toutefois, la sonde 2 visible sur la figure 1 est une sonde multizone et assure en conséquence des mesures d'impédance indépendantes et redondantes.

La sonde 2 comporte ainsi plusieurs jeux de d'électrodes réalisées sous la forme de jeux indépendants de plaques métalliques, ici au nombre de deux, séparés par une électrode séparatrice 4 commune, formée par l'une des plaques, et délimitant deux zones Z1 et Z2. Dans le mode de réalisation illustré à la figure 2, la sonde comporte ainsi deux ensembles de mesure de niveau redondants, formés chacun par un jeu de plaques métalliques associés chacun à un moyen de mesure de permittivité diélectrique entre les plaques. Bien entendu, on pourra utiliser un nombre accru de zones de détection afin d'augmenter le nombre de mesures de niveau redondantes.

Chaque zone Z1 ou Z2 comporte trois plaques métalliques 5,6 et 4, d'une part et 4,7 et 8, d'autre part.

Ces plaques sont distantes l'une de l'autre de sorte, qu'entre elles, des volumes de fluide, gaz ou liquide, peuvent circuler.

Chaque fluide possède une permittivité diélectrique relative au vide ($\varepsilon r$) qui lui est propre.

Par exemple, la permittivité de l'air est de 1,0005. Celle de l'huile ou des produits pétroliers est supérieure à 2. Celle de l'alcool est supérieure à 6. Enfin, la permittivité de l'eau est supérieure à 30.

La valeur du condensateur formé par les plaques parallèles et en vis-à-vis est donnée par la relation :

$$C = \varepsilon r \times (S/e)$$

Avec :

S= surface des plaques conductrices en $m^2$ ; et
e=distance entre les plaques en m.

La valeur du condensateur formée par chaque couple de plaques est donnée en farads. Ainsi, en fonction de la géométrie des électrodes, on mesure une impédance qui est l'image de la permittivité diélectrique du milieu dans lequel se situent les électrodes.

L'agencement des jeux d'électrodes en vis-à-vis séparés par la plaque séparatrice 4 permet de créer des groupes indépendants de condensateurs de mesure fournissant des mesures elles-mêmes indépendantes.

La sonde 2 comprend un dispositif de calcul 9 intégrant les capteurs de mesure d'impédance indépendants. Il récupère les parties réelles et imaginaires des impédances du fluide présent dans les zones Z1 et Z2 et les compare avec des valeurs de seuil.

Comme on le voit, le dispositif de calcul 9 comporte deux unités centrales indépendantes 9a et 9b assurant chacune et en parallèle le traitement des signaux S1 et S2 de mesures indépendantes d'impédance. Ces signaux sont fournis à un comparateur 9c qui assure la corrélation entre les valeurs d'impédances fournies. Il s'agit notamment de vérifier que l'écart entre les valeurs d'impédance obtenues pour chaque zone ne dépasse pas une valeur limite de seuil au-delà de laquelle on décide que la mesure de niveau n'est pas valable.

Lorsque la sonde détecte la présence d'un fluide dont la permittivité diélectrique correspond à celle d'un liquide et non à celle d'un gaz, le dispositif de calcul 9 met à jour le niveau d'un signal S d'autorisation ou d'interdiction de remplissage à destination du contrôleur de remplissage 3a.

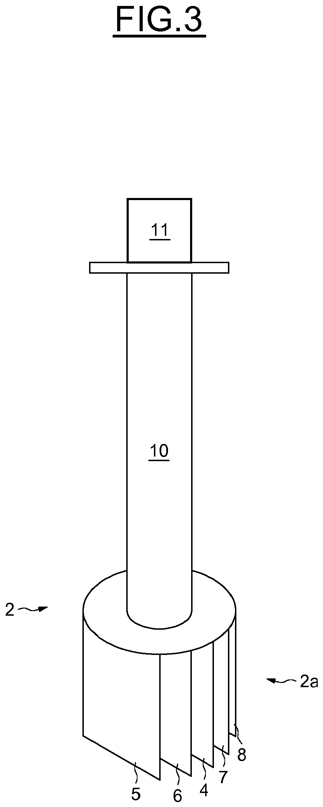

On a enfin représenté sur la figure 3 une vue schématique d'un exemple de réalisation d'une sonde conforme à l'invention.

Sur cette figure, on reconnaît les deux jeux de plaques 5, 6, 7 et 8 séparés par la plaque séparatrice 4.

Ces deux jeux de plaques sont montés sur un support en forme de tube 10, lui-même surmonté d'une tête 11 servant de relais de connexion pour le raccordement de la sonde avec le contrôleur de remplissage 3a.

Par exemple, l'unité centrale peut être réalisée sous la forme d'une carte électronique montée à l'intérieur du tube 10.

Un capot cylindrique (non représenté) laissant passer le fluide vient entourer les jeux de plaques afin de protéger mécaniquement ces dernières.

Comme illustré à la figure 1, l'ensemble vient se monter sur la citerne, à travers un orifice pratiqué dans la paroi de cette dernière, en partie haute, de sorte que le détecteur, et en particulier les électrodes, soit placé à la hauteur maximale de remplissage admissible.

## Revendications

1. Sonde (2) pour dispositif limiteur de remplissage pour citerne de transport de carburant pétrolier liquide, comprenant un détecteur de niveau monté sur un support (10, 11) venant se fixer sur la citerne (C) de sorte que le détecteur soit placé dans la citerne à une hauteur maximale de remplissage admissible, le détecteur de niveau comportant un capteur (2a) de mesure apte à assurer une mesure de niveau redondante, le capteur comprenant au moins un ensemble de mesure, chaque ensemble de mesure comportant au moins deux jeux d'électrodes (5,6), (7,8) séparées deux à deux et définissant des zones (Z1, Z2) de détection, **caractérisée en ce que** le capteur comprend des moyens (9a, 9b) de mesure de la permittivité diélectrique du fluide entre les électrodes, les moyens de mesure de permittivité diélectrique étant aptes à mesurer la permittivité diélectrique entre les électrodes indépendamment pour chaque zone de détection, les jeux d'électrodes étant séparés par une électrode séparatrice commune (4).

2. Sonde selon la revendication 1, dans laquelle le capteur (2a) comporte au moins deux ensembles de mesure indépendants afin d'augmenter la fiabilité du dispositif.

3. Sonde selon l'une des revendications 1 et 2, comprenant des moyens (9c) de traitement de signaux par corrélation des mesures de niveau redondantes issues du capteur de mesure afin d'en augmenter la sûreté.

4. Dispositif limiteur de remplissage pour citerne (C) de transfert de carburant pétrolier liquide, comprenant un ensemble de sondes selon l'une quelconque des revendications 1 à 3, pour détecter un niveau de remplissage dans un ensemble de compartiments et un contrôleur de remplissage (3a) recevant un signal d'autorisation de remplissage émis pour chaque sonde, pour piloter des actionneurs de type pompe et vanne d'un contrôleur de remplissage (3).

## Patentansprüche

1. Sonde (2) für Füllbegrenzer für Öltransporttank, mit einem auf eine Halterung (10, 11) montierten Füllstandsmesser, der so am Tank (C) befestigt wird, dass er sich im Tank auf Höhe des maximal zulässigen Füllstands befindet; dieser Füllstandsmesser ist mit einem für redundante Füllstandsmessungen geeigneten Messaufnehmer (2a) bestückt, welcher mindestens eine Messeinheit enthält, die jeweils aus mindestens zwei Elektrodensätzen (5, 6) (7, 8) aus jeweils zwei voneinander getrennten Elektroden besteht, welche Messzonen (Z1, Z2) festlegen; der Messaufnehmer umfasst Vorrichtungen (9a, 9b) zur Messung der dielektrischen Permittivität der Flüssigkeit zwischen den Elektroden, welche die dielektrische Permittivität zwischen den Elektroden für jede Messzone unabhängig messen können; die Elektrodensätze sind durch eine gemeinsame Trennelektrode (4) voneinander getrennt.

2. Sonde gemäß Anforderung 1, deren Messaufnehmer (2a) mindestens zwei voneinander unabhängige Messeinheiten umfasst, um die Zuverlässigkeit des Instruments zu erhöhen.

3. Sonde gemäß Anforderung 1 oder 2, mit über die Korrelation der redundanten Füllstandsmessungen des Messaufnehmers signalverarbeitenden Vorrichtungen (9c), zur Erhöhung der Sicherheit.

4. Füllstandsbegrenzer für Ölumfülltank (C), mit einer Einheit aus Sonden gemäß einer der Anforderungen 1 bis 3, zur Erfassung des Füllstands in einer Reihe von Kammern und mit einem Füllsensor (3a), der ein für jede Sonde ausgegebenes Füllgenehmigungssignal empfängt, über das Füllsensor-Auslöser (3) des Typs Pumpe und Ventil gesteuert werden.

**Claims**

1. Probe (2) for an overfill prevention system for tanks for transport of liquid fuels, comprising a level detector mounted on a support (10, 11) that is fixed on the tank (C) so that the detector is placed in the tank at a maximum permissible filling height involving a measuring sensor (2a) capable of providing a redundant level measurement, the sensor comprising at least one measuring assembly, each measuring assembly including at least two sets of electrodes (5,6), (7 ,8) separated in pairs and defining detection zones (Z1, Z2) **characterized in that** the level detector includes means (9a, 9b) for measuring the dielectric permittivity of the fluid between the electrodes, the dielectric permittivity measuring means being capable of measuring the dielectric permittivity between the electrodes independently for each detection zone, and the sets of electrodes being separated by a common separating electrode (4).

2. Probe according to claim 1, wherein the sensor (2a) includes at least two independent measuring assemblies in order to increase the reliability of the device.

3. Probe according to one of claims 1 and 2, comprising means (9c) for processing signals by correlation of the redundant level measurements from the measuring sensor in order to increase the safety thereof.

4. Overfill prevention system for tanks for transport of liquid fuels (C), comprising a probe assembly according to any one of claims 1 to 3, for detecting a filling level in a set of compartments, and a filling controller (3a) receiving a filling authorization signal emitted for each probe, for controlling pump and valve type actuators of a filling controller (3).

# FIG.1

# FIG.2

# FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4115207 A1